# EUROPEAN PATENT APPLICATION

(11) **EP 4 563 445 A1**
(43) Date of publication of application: **04.06.2025**
(21) Application number: 23845703.0
(22) Date of filing: 28.07.2023
(51) Int. Cl.: B62D 21/02, B62D 25/20, B60K 1/04

(54) **VEHICLE**

(30) Priority: 29.07.2022 CN 202210911282
(71) Applicant: BYD Company Limited, Shenzhen, Guangdong 518118 (CN)
(72) Inventor: YAN, Junfei, Shenzhen, Guangdong 518118 (CN); ZHAO, Baoguang, Shenzhen, Guangdong 518118 (CN); LIU, Tengyong, Shenzhen, Guangdong 518118 (CN); HUANG, Hai, Shenzhen, Guangdong 518118 (CN); ZHAO, Yanli, Shenzhen, Guangdong 518118 (CN)
(74) Representative: Mathys & Squire
(86) International application number: PCT/CN2023/109873
(87) International publication number: WO 2024/022499

(57) **Abstract**

A vehicle. A vehicle (100) comprises: a left front longitudinal beam (111) and a right front longitudinal beam (112), wherein the left front longitudinal beam (111) and the right front longitudinal beam (112) are arranged spaced apart in the widthwise direction of the vehicle; a left A pillar (131) and a right A pillar (132), wherein the left front longitudinal beam (111) is connected to a lower section of the left A pillar (131), and the right front longitudinal beam (112) is connected to a lower section of the right A pillar (132); a windshield upper cross beam (14), wherein two ends of the windshield upper cross beam (14) are respectively connected to an upper section of the left A pillar (131) and an upper section of the right A pillar (132); and a battery pack (16), wherein the front end of the battery pack (16) is directly connected to the left front longitudinal beam (111) and the right front longitudinal beam (112), respectively. The left front longitudinal beam (111), the right front longitudinal beam (112), the left A pillar (131), the right A pillar (132), the windshield upper cross beam (14) and the battery pack (16) form a first A-pillar annular force transmission structure (1), which can improve the structural strength of the front end of the vehicle and improve the torsional strength of the vehicle.

## Description

### CROSS-REFERENCE TO RELATED APPLICATIONS

The present disclosure claims priority to Chinese Patent Application No. "202210911282.5", filed by the BYD Co., Ltd. on July 29, 2022 and entitled "VEHICLE".

### FIELD

The present disclosure relates to the technical field of electric vehicles, and more specifically, to a vehicle.

### BACKGROUND

To protect a battery pack of an electric vehicle, the battery pack is usually arranged underneath the vehicle. In the related art, the battery pack is connected to a vehicle body assembly on two sides in a width direction through connection points arranged on two sides. However, the battery pack is connected to the vehicle body assembly only in the width direction of the vehicle body assembly, causing the battery pack to be unable to effectively improve torsional performance of the vehicle body.

### SUMMARY

The present disclosure is intended to resolve one of technical problems in the related art at least to some extent.

The present disclosure provides a vehicle.

The vehicle according to the present disclosure includes a left front longitudinal beam, a right front longitudinal beam, a left A-pillar, a right A-pillar, a windshield upper cross beam, and a battery pack. The left front longitudinal beam and the right front longitudinal beam are arranged spaced apart in a width direction of the vehicle. The left A-pillar and the right A-pillar are arranged spaced apart in the width direction of the vehicle. The left front longitudinal beam is connected to a lower section of the left A-pillar. The right front longitudinal beam is connected to a lower section of the right A-pillar. Two ends of the windshield upper cross beam are respectively connected to an upper section of the left A-pillar and an upper section of the right A-pillar. A front end of the battery pack is directly connected to the left front longitudinal beam and the right front longitudinal beam respectively. The left front longitudinal beam, the right front longitudinal beam, the left A-pillar, the right A-pillar, the windshield upper cross beam, and the battery pack form a first A-pillar annular force transmission structure.

In the vehicle according to this embodiment of the present disclosure, the front end of the battery pack is directly connected to the left front longitudinal beam and the right front longitudinal beam respectively, to cause the left front longitudinal beam, the battery pack, the right front longitudinal beam, the right A-pillar, the windshield upper cross beam, and the left A-pillar to form the first A-pillar annular force transmission structure in front of a passenger compartment and upper front of the battery pack. Therefore, the battery pack is used as a part of the first A-pillar annular force transmission structure, which can effectively enhance strength of the first A-pillar annular force transmission structure, improve torsional resistance thereof, and improve torsional strength of the vehicle.

Part of additional aspects and advantages of the present disclosure is provided in the following description. The part becomes apparent from the following description, or is learned through practice of the present disclosure.

### BRIEF DESCRIPTION OF THE DRAWINGS

FIG. 1 is a bottom view of a vehicle without a battery pack being mounted according to an embodiment of the present disclosure;
FIG. 2 is a bottom view of a vehicle with a battery pack being mounted to a vehicle bottom according to an embodiment of the present disclosure;
FIG. 3 is an exploded view of a vehicle according to an embodiment of the present disclosure;
FIG. 4 is a schematic diagram of an A-pillar of a vehicle according to an embodiment of the present disclosure;
FIG. 5 is a schematic diagram of a rear floor of a vehicle according to an embodiment of the present disclosure;
FIG. 6 is a schematic diagram of a tail end of a vehicle according to an embodiment of the present disclosure; and
FIG. 7 is a schematic diagram of a tail end of a vehicle with a middle floor being removed according to an embodiment of the present disclosure.

### DETAILED DESCRIPTION

Embodiments of the present disclosure are described in detail below. Examples of the embodiments are shown in accompany drawings. Same or similar elements or elements having same or similar functions are denoted by same or similar reference numerals throughout the description. The embodiments described below with reference to the accompanying drawings are exemplary and intended to explain the present disclosure, and should not be construed as a limitation on the present disclosure.

In the description of the present disclosure, it should be understood that orientation or position relationships indicated by the terms such as "center", "longitudinal", "transverse", "length", "width", "upper", "lower", "front", "rear", "left", "right", "vertical", "horizontal", "top", "bottom", "inner", "outer", and "circumferential direction" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as a limitation on the present disclosure.

In the present disclosure, unless otherwise explicitly specified or defined, the terms such as "mount", "connected", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. A person of ordinary skill in the art may understand the specific meanings of the foregoing terms in the present disclosure according to specific situations.

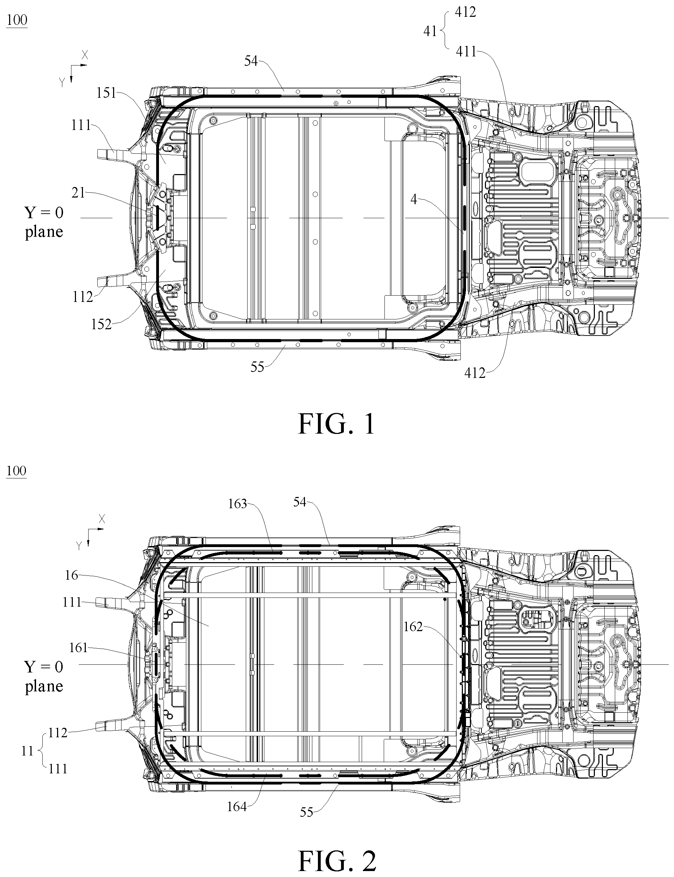

A vehicle 100 in the embodiments of the present disclosure is described below with reference to FIG. 1 to FIG. 7.

Referring to FIG. 1, FIG. 2, and FIG. 4, the embodiments of the present disclosure provide the vehicle 100. The vehicle includes a left front longitudinal beam 111, a right front longitudinal beam 112, a left A-pillar 131, a right A-pillar 132, a windshield upper cross beam 14, and a battery pack 16. The left front longitudinal beam 111 and the right front longitudinal beam 112 are arranged spaced apart in a width direction of the vehicle 100. The left A-pillar 131 and the right A-pillar 132 are arranged spaced apart in the width direction of the vehicle 100. The left front longitudinal beam 111 is connected to a lower section of the left A-pillar 131. The right front longitudinal beam 112 is connected to a lower section of the right A-pillar 132. Two ends of the windshield upper cross beam 14 are respectively connected to an upper section of the left A-pillar 131 and an upper section of the right A-pillar 132. A front end 161 of the battery pack is directly connected to the left front longitudinal beam 111 and the right front longitudinal beam 112 respectively. The left front longitudinal beam 111, the right front longitudinal beam 112, the left A-pillar 131, the right A-pillar 132, the windshield upper cross beam 14, and the battery pack 16 form a first A-pillar annular force transmission structure 1.

Referring to FIG. 1, FIG. 2, and FIG. 4, the vehicle 100 in the embodiments of the present disclosure includes a left front longitudinal beam 111, a right front longitudinal beam 112, a left A-pillar 131, a right A-pillar 132, a windshield upper cross beam 14, and a battery pack 16. The left A-pillar 131 and the right A-pillar 132 are arranged spaced apart in a width direction of the vehicle 100. Two ends of the windshield upper cross beam 14 are respectively connected to an upper section of the left A-pillar 131 and an upper section of the right A-pillar 132, thereby connecting the left A-pillar 131 and the right A-pillar 132 together at the upper sections thereof. The left front longitudinal beam 111 and the right front longitudinal beam 112 are arranged spaced apart in the width direction of the vehicle 100. The front end 161 of the battery pack is directly connected to the left front longitudinal beam 111 and the right front longitudinal beam 112 respectively, thereby connecting the left front longitudinal beam 111 and the right front longitudinal beam 112 together in the width direction of the vehicle 100. The left front longitudinal beam 111 is connected to a lower section of the left A-pillar 131. A rear section of the right longitudinal beam is connected to a lower section of the right A-pillar 132, thereby connecting the left A-pillar 131 and the right A-pillar 132 at the lower sections thereof. In this case, the left front longitudinal beam 111, the battery pack 16, the right front longitudinal beam 112, the right A-pillar 132, the windshield upper cross beam 14, and the left A-pillar 131 form a first A-pillar annular force transmission structure 1. Since the battery pack 16 has relatively great strength and stiffness, the battery pack 16 is used as a part of the first A-pillar annular force transmission structure 1, which can effectively enhance strength of the first A-pillar annular force transmission structure 1, improve torsional resistance, and improve torsional strength of the vehicle 100.

In this way, in the vehicle 100 according to the embodiments of the present disclosure, the front end of the battery pack 161 is directly connected to the left front longitudinal beam 111 and the right front longitudinal beam 112 respectively, to cause the left front longitudinal beam 111, the battery pack 16, the right front longitudinal beam 112, the right A-pillar 132, the windshield upper cross beam 14, and the left A-pillar 131 to form the first A-pillar annular force transmission structure 1. Through the first A-pillar annular force transmission structure 1, the torsional strength of the vehicle 100 can be improved.

Compared with some technologies, the battery pack 16 is only provided with connection points on two sides of the vehicle 100 in the width direction, and is not connected to an A-pillar 13 at the front end of the vehicle 100. In the present disclosure, the front end 161 of the battery pack is directly connected to the left front longitudinal beam 111 and the right front longitudinal beam 112 respectively, thereby forming the first A-pillar annular force transmission structure 1 with the left front longitudinal beam 111, the right front longitudinal beam 112, the right A-pillar 132, the windshield upper cross beam 14, and the left A-pillar 131, which can effectively enhance the strength of the first A-pillar annular force transmission structure 1, improve the torsional resistance, and improve the torsional strength of the vehicle 100.

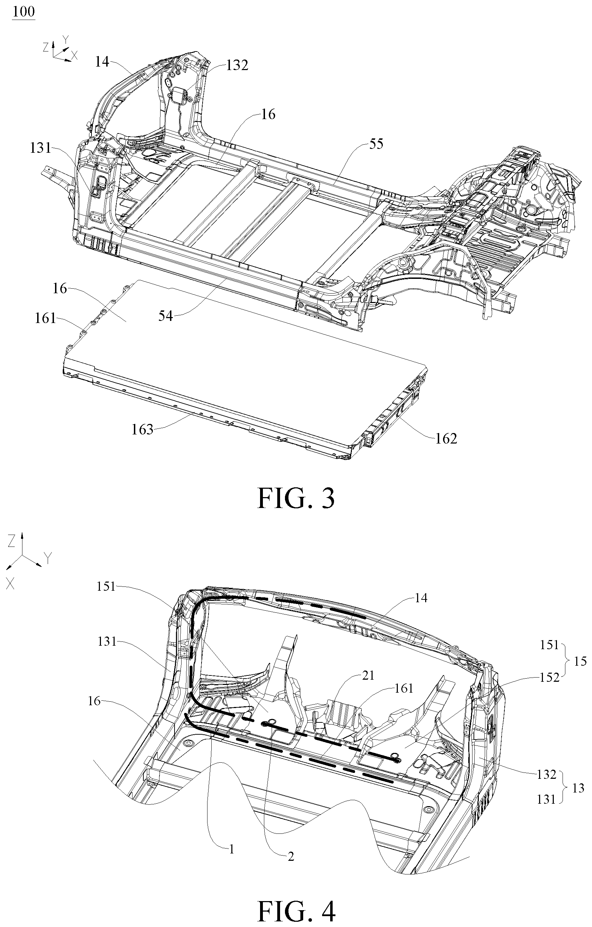

In some embodiments of the present disclosure, referring to FIG. 1 and FIG. 4, the vehicle 100 further includes a dashboard lower cross beam 21. The dashboard lower cross beam 21 is arranged between the left front longitudinal beam 111 and the right front longitudinal beam 112, and is respectively connected to the left front longitudinal beam 111 and the right front longitudinal beam 112. The left front longitudinal beam 111, the right front longitudinal beam 112, the left A-pillar 131, the right A-pillar 132, the windshield upper cross beam 14, and the dashboard lower cross beam 21 form a second A-pillar annular force transmission structure 2. The second A-pillar annular force transmission structure 2 is combined with the first A-pillar annular force transmission structure 1 to improve the torsional strength of the vehicle 100.

In some embodiments of the present disclosure, referring to FIG. 2, a projection of the battery pack 16 in an up-down direction of the vehicle 100 at least partially overlaps with a projection of the dashboard lower cross beam 21 in the up-down direction of the vehicle 100, so that the battery pack 16 and the dashboard lower cross beam 21 at least partially form a superimposed double-layer structure in a height direction of the vehicle 100, which can improve the strength of the first A-pillar annular force transmission structure 1, improve the torsion resistance, and improve the torsional strength of the vehicle 100.

In some embodiments, referring to FIG. 2, the projection of the dashboard lower cross beam 21 in the up-down direction of the vehicle 100 completely falls within the projection of the battery pack 16 in the up-down direction of the vehicle 100.

In some embodiments of the present disclosure, referring to FIG. 4, the front end 161 of the battery pack is directly connected to the dashboard lower cross beam 21. The front end 161 of the battery pack is directly connected to the dashboard lower cross beam 21, so that the first A-pillar annular force transmission structure 1 and the second A-pillar annular force transmission structure 2 are connected together, thereby enhancing the strength of the first A-pillar annular force transmission structure 1, and improving the torsional resistance of the vehicle 100.

In some embodiments of the present disclosure, referring to FIG. 1, the left front longitudinal beam 111 includes a rear section 151 of the left front longitudinal beam. The right front longitudinal beam 112 includes a rear section 152 of the right front longitudinal beam. The rear section 151 of the left front longitudinal beam is respectively connected to the left A-pillar 131 and the dashboard lower cross beam 21. The rear section 152 of the right front longitudinal beam is respectively connected to the right A-pillar 132 and the dashboard lower cross beam 21.

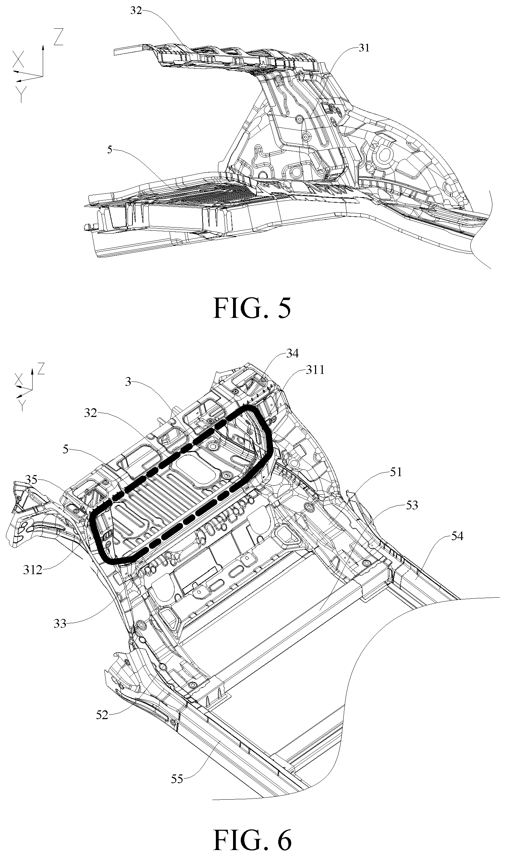

In some embodiments of the present disclosure, referring to FIG. 5 and FIG. 6, the vehicle 100 further includes a rear floor upper cross beam 33, a left shelf support plate 311, a right shelf support plate 312, and a shelf connecting plate 32. The left shelf support plate 311 and the right shelf support plate 312 are arranged spaced apart in a width direction of the vehicle 100. Two ends of the rear floor upper cross beam 33 are respectively connected to a lower section of the left shelf support plate 311 and a lower section of the right shelf support plate 312. Two ends of the shelf connecting plate 32 are respectively connected to an upper section of the left shelf support plate 311 and an upper section of the right shelf support plate 312. The rear floor upper cross beam 33, the left shelf support plate 311, the right shelf support plate 312, and the shelf connecting plate 32 form a first C-pillar annular structure 3.

The left shelf support plate 311 and the right shelf support plate 312 are connected by the shelf connecting plate 32 at the upper sections thereof, and are connected by the rear floor upper cross beam 33 at the lower sections thereof. In this way, the left shelf support plate 311, the shelf connecting plate 32, the rear floor upper cross beam 33, and the right shelf support plate 312 form the first C-pillar annular structure 3, which improves the structural strength of the vehicle 100 at a C-pillar.

The rear floor upper cross beam 33 is arranged at a front end of the rear floor 5. Left and right ends of the rear floor 5 are respectively connected to an inner wheel housing panel. First joints are connected to two ends of the rear floor upper cross beam 33. The two ends of the rear floor upper cross beam 33 are respectively connected to the left shelf support plate 311 and the right shelf support plate 312 through the first joint. The left shelf support plate 311 includes a left shelf front support plate and a left shelf rear support plate. On a left side of the rear floor upper cross beam 33, upper ends of the first joints are connected to a lower end of the left shelf front support plate and a lower end of the left shelf rear support plate. An upper end of the left shelf front support plate and an upper end of the left shelf rear support plate are connected to one end of the shelf connecting plate 32. On a right side of the rear floor upper cross beam 33, the upper ends of the first joint are connected to a lower end of a right shelf front support plate and a lower end of a right shelf rear support plate. An upper end of the right shelf front support plate and an upper end of the right shelf rear support plate are connected to another end of the shelf connecting plate 32.

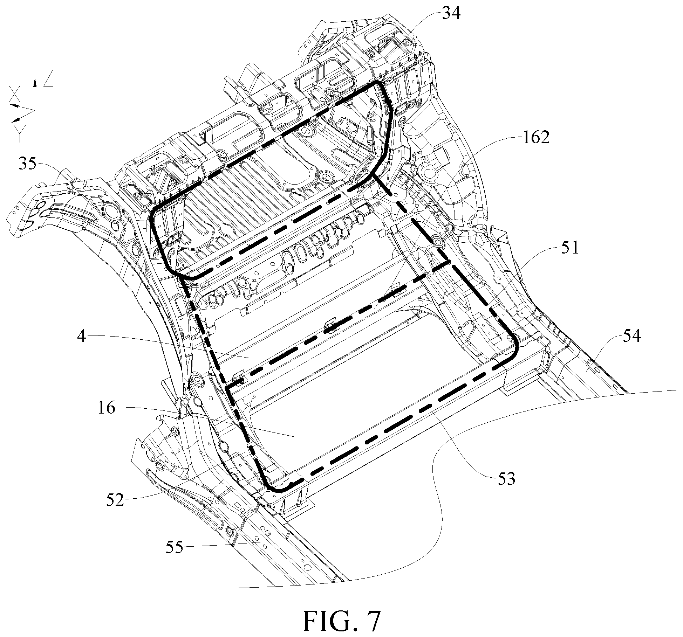

In some embodiments of the present disclosure, referring to FIG. 6 and FIG. 7, the vehicle 100 further includes a left C-pillar 34 and a right C-pillar 35. The left shelf support plate 311 is connected to the left C-pillar 34. The right shelf support plate 312 is connected to the right C-pillar 35. The first C-pillar annular structure 3 is connected to the left C-pillar 34 and the right C-pillar 35 through the left shelf support plate 311 and the right shelf support plate 312, which can further effectively enhance the torsional stiffness of the vehicle 100 and improve the torsional resistance while enhancing the strength of the first C-pillar annular structure 3.

In some embodiments of the present disclosure, referring to FIG. 1, the vehicle 100 further includes a middle floor lower cross beam 4, a left rear longitudinal beam 411, and a right rear longitudinal beam 412. The left rear longitudinal beam 411 and the right rear longitudinal beam 412 are arranged spaced apart in the width direction of the vehicle 100. Two ends of the middle floor lower cross beam 4 are respectively connected to the left rear longitudinal beam 411 and the right rear longitudinal beam 412. Two ends of the rear floor upper cross beam 33 are respectively connected to the left rear longitudinal beam 411 and the right rear longitudinal beam 412.

The left rear longitudinal beam 411 and the right rear longitudinal beam 412 are connected at a front end by the middle floor lower cross beam 4 and connected at a rear end by the rear floor upper cross beam 33, thereby forming a closed second C-pillar annular structure, which improves the structural strength of the vehicle 100 in the position, facilitates the overall structural strength of the vehicle 100, and then can effectively improve the torsional stiffness of the vehicle 100 and improve the torsional resistance while enhancing the strength of the first C-pillar annular structure 3.

In some embodiments of the present disclosure, referring to FIG. 7, a rear end 162 of the battery pack is connected to the middle floor lower cross beam 4, so that the battery pack 16, a front section of the left rear longitudinal beam 411, the rear floor upper cross beam 33, and a front section of the right rear longitudinal beam 412 form a closed third C-pillar annular structure, which improves connection strength between the battery pack 16 and the vehicle 100, improves the structural strength of the vehicle 100 in the position, and facilitates the overall structural strength of the vehicle 100. In addition, the first C-pillar annular structure 3 can be further enhanced to improve the torsional strength of the vehicle 100.

In some embodiments of the present disclosure, referring to FIG. 6 and FIG. 7, the vehicle 100 further includes a rear floor 5. The rear floor upper cross beam 33 is connected to the rear floor 5. The left rear longitudinal beam 411 includes a left rear longitudinal beam sealing plate 51. The left rear longitudinal beam sealing plate 51 is respectively connected to the middle floor lower cross beam 4 and the rear floor 5. The right rear longitudinal beam 412 includes a right rear longitudinal beam sealing plate 52. The right rear longitudinal beam sealing plate 52 is respectively connected to the middle floor lower cross beam 4 and the rear floor 5. A fourth C-pillar annular structure is formed by connecting the middle floor lower cross beam 4 and the rear floor upper cross beam 33 by the left rear longitudinal beam sealing plate 51 and the right rear longitudinal beam sealing plate 52. The fourth C-pillar annular structure is connected to the first C-pillar annular structure 3, which enhances the strength of the first C-pillar annular structure 3.

In some embodiments of the present disclosure, referring to FIG. 6 and FIG. 7, the vehicle 100 further includes a seat mounting cross beam 53. The seat mounting cross beam 53 is respectively connected to the left rear longitudinal beam sealing plate 51 and the right rear longitudinal beam sealing plate 52. A fifth C-pillar annular structure may be formed by connecting the seat mounting cross beam 53 and the middle floor lower cross beam 4 by the left rear longitudinal beam sealing plate 51 and the right rear longitudinal beam sealing plate 52. The fifth C-pillar annular structure is connected to the first C-pillar annular structure 3, which enhances the strength of the first C-pillar annular structure 3.

In some embodiments of the present disclosure, referring to FIG. 3, the vehicle 100 further includes a left sill beam 54 and a right sill beam 55. The left sill beam 54 and the right sill beam 55 are arranged spaced apart in the width direction of the vehicle 100. The left sill beam 54 is connected to the left A-pillar 131. The right sill beam 55 is connected to the right A-pillar 132. Two sides of the battery pack 16 are directly connected to the left sill beam 54 and the right sill beam 55 respectively.

The left sill beam 54 and the right sill beam 55 form mounting beams of the battery pack 16 on two sides of the vehicle 100. The two sides of the battery pack 16 are connected to the left sill beam 54 and the right sill beam 55. The left sill beam 54 is connected to the left A-pillar 131, and the right sill beam 55 is connected to the right A-pillar 132, to enable better involvement of the battery pack 16 in the first A-pillar annular force transmission structure 1, which can better enhance the strength of the first A-pillar annular force transmission structure 1, improve the torsional resistance, and improve the torsional strength of the vehicle 100.

In some embodiments of the present disclosure, the left front longitudinal beam 111 is connected to the left sill beam 54, and the right front longitudinal beam 112 is connected to the right sill beam 55. The left front longitudinal beam 111 is connected to the left sill beam 54, and the right front longitudinal beam 112 is connected to the right sill beam 55, thereby enhancing the strength of the first A-pillar annular force transmission structure 1, improving the torsional resistance, and improving the torsional strength of the vehicle 100.

In some embodiments of the present disclosure, referring to FIG. 6 and FIG. 7, the vehicle 100 further includes the middle floor lower cross beam 4. Two ends of the middle floor lower cross beam 4 are connected to the left sill beam 54 and the right sill beam 55. The rear end 162 of the battery pack is connected to the middle floor lower cross beam 4. The middle floor lower cross beam 4 and the dashboard lower cross beam 21 are connected by the left sill beam 54, the right sill beam 55, the left front longitudinal beam 111, and the right front longitudinal beam 112, to form an overall annular force transmission structure. A battery mounting point is arranged on each of the left sill beam 54, the right sill beam 55, the left front longitudinal beam 111, the right front longitudinal beam 112, the middle floor lower cross beam 4, and the dashboard lower cross beam 21. The battery pack 16 is connected to the overall annular force transmission structure through the battery mounting points, which can enhance the strength of the overall annular force transmission structure, thereby improving the torsional stiffness of the vehicle 100 and improving handling of the vehicle 100.

The left rear longitudinal beam is further connected to the left sill beam, and the right rear longitudinal beam is further connected to the right rear longitudinal beam, so that the left rear longitudinal beam and the right rear longitudinal beam can effectively enhance the strength of the overall annular force transmission structure and improve force transmission capability and the torsional resistance.

The front end 161 of the battery pack is connected to the battery mounting point on the dashboard lower cross beam 21. The rear end 162 of the battery pack is connected to the battery mounting point on the middle floor lower cross beam 4. A left side 163 of the battery pack is connected to the battery mounting point on the left sill beam 54. A right side 164 of the battery pack is connected to the battery mounting point on the right sill beam 55, which can effectively reduce a weight of the vehicle, increase a ground clearance of the vehicle or increase space inside the vehicle, or reduce a vehicle height to improve the handling.

In some embodiments of the present disclosure, at least part of an upper surface of the battery pack 16 is formed as a floor of the vehicle 100. The battery pack 16 is connected to a vehicle body through a battery connection plate, and a gap between the battery pack 16 and a vehicle body structure is sealed.

In the descriptions of the specification, a description with reference to a term such as "an embodiment", "some embodiments", "an example", "a specific example", or "some examples" means that specific features, structures, materials, or characteristics described with reference to the embodiment or the example are included in at least one embodiment or example of the present disclosure. In this specification, schematic descriptions of the foregoing terms are not necessarily directed at the same embodiment or example. Moreover, the specific features, structures, materials, or characteristics described may be combined in a proper manner in any one or more embodiments or examples. In addition, a person skilled in the art may integrate or combine different embodiments or examples described in the specification and features of the different embodiments or examples as long as they are not contradictory to each other.

Although the embodiments of the present disclosure have been shown and described above, it may be understood that the above embodiments are exemplary and cannot be construed as a limitation on the present disclosure. A person of ordinary skill in the art may make changes, modifications, replacements, or variations to the above embodiments within the scope of the present disclosure.

## Claims

1. A vehicle, **characterised in that**, comprising:
a left front longitudinal beam and a right front longitudinal beam, the left front longitudinal beam and the right front longitudinal beam being arranged spaced apart in a width direction of the vehicle;
a left A-pillar and a right A-pillar, the left A-pillar and the right A-pillar being arranged spaced apart in the width direction of the vehicle, the left front longitudinal beam being connected to a lower section of the left A-pillar, and the right front longitudinal beam being connected to a lower section of the right A-pillar;
a windshield upper cross beam, two ends of the windshield upper cross beam being respectively connected to an upper section of the left A-pillar and an upper section of the right A-pillar; and
a battery pack, a front end of the battery pack being directly connected to the left front longitudinal beam and the right front longitudinal beam respectively,
wherein the left front longitudinal beam, the right front longitudinal beam, the left A-pillar, the right A-pillar, the windshield upper cross beam, and the battery pack form a first A-pillar annular force transmission structure.

2. The vehicle according to claim 1, the vehicle further comprising a dashboard lower cross beam, the dashboard lower cross beam being arranged between the left front longitudinal beam and the right front longitudinal beam, and being respectively connected to the left front longitudinal beam and the right front longitudinal beam,
wherein the left front longitudinal beam, the right front longitudinal beam, the left A-pillar, the right A-pillar, the windshield upper cross beam, and the dashboard lower cross beam form a second A-pillar annular force transmission structure.

3. The vehicle according to claim 2, wherein a projection of the battery pack in an up-down direction of the vehicle at least partially overlaps with a projection of the dashboard lower cross beam in the up-down direction of the vehicle.

4. The vehicle according to claim 3, wherein the front end of the battery pack is directly connected to the dashboard lower cross beam.

5. The vehicle according to claim 3 or 4, wherein the left front longitudinal beam comprises a rear section of the left front longitudinal beam, and the right front longitudinal beam comprises a rear section of the right front longitudinal beam,
wherein the rear section of the left front longitudinal beam is respectively connected to the left A-pillar and the dashboard lower cross beam; and the rear section of the right front longitudinal beam is respectively connected to the right A-pillar and the dashboard lower cross beam.

6. The vehicle according to any of claims 1 to 5, the vehicle further comprising:
a rear floor upper cross beam;
a left shelf support plate and a right shelf support plate, the left shelf support plate and the right shelf support plate being arranged spaced apart in the width direction of the vehicle, and two ends of the rear floor upper cross beam being respectively connected to a lower section of the left shelf support plate and a lower section of the right shelf support plate; and
a shelf connecting plate, two ends of the shelf connecting plate being respectively connected to an upper section of the left shelf support plate and an upper section of the right shelf support plate,
wherein the rear floor upper cross beam, the left shelf support plate, the right shelf support plate, and the shelf connecting plate form a first C-pillar annular structure.

7. The vehicle according to claim 6, the vehicle further comprising a left C-pillar and a right C-pillar, the left shelf support plate being connected to the left C-pillar, and the right shelf support plate being connected to the right C-pillar.

8. The vehicle according to claim 7, the vehicle further comprising:
a middle floor lower cross beam; and
a left rear longitudinal beam and a right rear longitudinal beam, the left rear longitudinal beam and the right rear longitudinal beam being arranged spaced apart in the width direction of the vehicle, two ends of the middle floor lower cross beam being respectively connected to the left rear longitudinal beam and the right rear longitudinal beam, and the two ends of the rear floor upper cross beam being respectively connected to the left rear longitudinal beam and the right rear longitudinal beam.

9. The vehicle according to claim 8, wherein a rear end of the battery pack is connected to the middle floor lower cross beam.

10. The vehicle according to claim 9, the vehicle further comprising:
a rear floor, the rear floor upper cross beam being connected to the rear floor,
the left rear longitudinal beam comprising a left rear longitudinal beam sealing plate, the left rear longitudinal beam sealing plate being respectively connected to the middle floor lower cross beam and the rear floor,
the right rear longitudinal beam comprising a right rear longitudinal beam sealing plate, and the right rear longitudinal beam sealing plate being respectively connected to the middle floor lower cross beam and the rear floor.

11. The vehicle according to claim 10, the vehicle further comprising:
a seat mounting cross beam, the seat mounting cross beam being respectively connected to the left rear longitudinal beam sealing plate and the right rear longitudinal beam sealing plate.

12. The vehicle according to any of claims 4 to 11, the vehicle further comprising:
a left sill beam and a right sill beam, the left sill beam and the right sill beam being arranged spaced apart in the width direction of the vehicle, the left sill beam being connected to the left A-pillar, the right sill beam being connected to the right A-pillar, and two sides of the battery pack being directly connected to the left sill beam and the right sill beam respectively.

13. The vehicle according to claim 12, wherein the left front longitudinal beam is connected to the left sill beam; and the right front longitudinal beam is connected to the right sill beam.

14. The vehicle according to claim 12 or 13, the vehicle further comprising:
a middle floor lower cross beam, two ends of the middle floor lower cross beam being connected to the left sill beam and the right sill beam, and
a rear end of the battery pack being connected to the middle floor lower cross beam.

15. The vehicle according to claim 14, wherein at least part of an upper surface of the battery pack is formed as a vehicle floor.
